# EUROPÄISCHE PATENTSCHRIFT

(11) **EP 2 457 754 B1**
(45) Veröffentlichungstag und Bekanntmachung des Hinweises auf die Patenterteilung: **09.11.2016**
(21) Anmeldenummer: 11176070.8
(22) Anmeldetag: 01.08.2011
(51) Int. Cl.: B60G 7/00, B62D 7/14

(54) **Fahrwerkaktuator**
Suspension actuator
Actionneur de suspension

(30) Priorität: 30.11.2010 DE 102010052920
(43) Veröffentlichungstag der Anmeldung: 30.05.2012
(73) Patentinhaber: Schaeffler Technologies AG & Co. KG, 91074 Herzogenaurach (DE)
(72) Erfinder: Osterlänger, Jürgen, 91448 Emskirchen (DE); Lauger, Mark, 91362 Pretzfeld (DE); Mehlis, Thomas, 91077 Kleinsendelbach (DE)

(56) Entgegenhaltungen:
- EP-A1- 0 258 571
- DE-A1- 3 836 255
- DE-A1-102005 023 250
- DE-A1-102008 021 861
- DE-A1-102008 024 910
- DE-U1-202005 002 585
- US-A- 3 111 822
- US-A- 4 246 991
- US-A- 6 158 295

## Beschreibung

### Gebiet der Erfindung

Die Erfindung betrifft einen Fahrwerkaktuator zum Stellen eines beweglich gelagerten Bauteils eines Kraftfahrzeugfahrwerks, umfassend ein mit dem beweglich gelagerten Bauteil zu verbindendes erstes Aktuatorbauteil und ein mit einem lagefesten Fahrwerksbauteil zu verbindendes zweites Aktuatorbauteil, wobei beide Aktuatorbauteile über einen Kugelgewindetrieb umfassend eine Gewindespindel und eine auf dieser laufende Mutter axial verstellbar sind, wobei die Mutter über einen Antriebsmotor, der als Elektromotor umfassend einen mit der Mutter bewegungsgekoppelten Rotor und einen lagefesten Stator in axialsymmetrischer Anordnung zur Mutter ausgeführt ist, zur Axialverstellung der Gewindespindel antreibbar ist.

### Hintergrund der Erfindung

Derartige Fahrwerkaktuatoren kommen zunehmend in sogenannten "aktiven" Fahrwerken zum Einsatz. Sie dienen dort beispielsweise der Spur- oder Sturzverstellung oder zur Verstellung des Fahrzeugniveaus. Diese Verstellung wird dadurch ermöglicht, dass der Aktuator zwei axial relativ zueinander bewegliche Aktuatorbauteile aufweist, von denen das eine an einem ersten und das andere an einem zweiten Fahrwerksteil angeordnet sind. Beide Aktuatorbauteile sind über ein Kugelgewindetrieb verbunden, der wiederum über einen über eine geeignete Steuerungseinrichtung ansteuerbaren Elektromotor antreibbar ist. Ist der Elektromotor in Betrieb, so wird die Mutter über den Elektromotor relativ zur Spindel verdreht, die daraus resultierend axial verschoben wird, woraus die axiale Verstellung der Aktuatorbauteile und daraus wiederum resultierend die Verstellung des Fahrwerks erfolgt.

Ein Problem bei derartigen Fahrwerkaktuatoren ist, dass von außen auf den Fahrwerkaktuator einwirkende Kräfte, also Kräfte, die über das Fahrwerk selbst auf den Aktuator eingetragen werden, zu einer unbeabsichtigten Verstellung des Aktuators und damit der gewählten Fahrwerkseinstellung führen können, weshalb diese Kräfte aufgefangen respektive der Aktuator in der gewählten Stellposition fixiert werden muss. Dies kann unmittelbar über den Elektromotor selbst erfolgen, das heißt, dass dieser kontinuierlich bestromt wird, um den Aktuator in der gewünschten Position zu halten. Dies ist jedoch steuerungstechnisch wie auch im Hinblick auf den Energiehaushalt sehr aufwändig.

Aus DE 38 36 255 C2 ist ein Fahrwerkaktuator der eingangs genannten Art bekannt, bei dem neben einem den Rotor mit der Mutter bewegungskoppelnden, aufwändig gestalteten Planetengetriebe eine elektromagnetische Klauenkupplung zum Blockieren der Spindelmutter bei nicht bestromtem Elektromotor vorgesehen ist. Diese Klauenkupplung umfasst eine Kupplungsscheibe, die axial verschieblich, jedoch unverdrehbar auf einem dem Elektromotor abgewandten Bund eines Spindelmutterflansches angeordnet ist. Die Kupplungsscheibe ist über eine Feder zur Stirnwand des Aktuatorgehäuses vorgespannt. Durch jeweils eine Stirnverzahnung auf der Kupplungsscheibe und der Innenseite der Stirnwand lässt sich im eingekuppelten Zustand der Kupplungsscheibe eine formschlüssige Verbindung der Kupplungsscheibe mit der Stirnwand und dadurch ein Blockieren der Spindelmutter sowie der Gewindespindel erreichen. Zum Auskuppeln der Klauenkupplung ist auf der Seite der Feder ein Ringmagnet vorgesehen, der bei Erregung die Kupplungsscheibe gegen die Kraft der Feder aus der Stirnverzahnung zieht und folglich die Blockierung aufhebt. Zwar kann durch diese Blockiereinrichtung eine Positionsfixierung des Aktuators bei nicht betätigtem Elektromotor auf rein mechanischem Weg erreicht werden. Jedoch ist zum einen die Ausgestaltung in konstruktiver wie in funktioneller Hinsicht sehr aufwändig, zum anderen ist stets eine simultane Bestromung sowohl des Elektromotors als auch des die Klauenkupplung öffnenden Ringmagneten erforderlich. Ist eine Bestromung des Ringmagneten aufgrund eines Fehlerfalls nicht möglich, ist eine Verstellung des Aktuators ausgeschlossen.

Aus DE10 2008 024 910 A1 ist ein Fahrwerksaktuator gemäß den Merkmalen des Oberbegriffs des Anspruchs 1 bekannt geworden. Der Rotor ist mit der Mutter über eine die Mutter radial umgebende Schlingfeder bewegungsgekoppelt ist, über die die Mutter bei Drehung des Rotors gedreht wird; die Schlingfeder bildet eine - durch eine auf die Mutter wirkende und diese verdrehende externe fahrwerkseitige Kraft betätigbare - Bremseinrichtung, die ein der Mutterdrehung entgegenwirkendes Reibmoment aufbaut. Der rohrförmige Rotor des Elektromotors ist einerseits über ein Kugellager an einem umgebenden Gehäuse gelagert; anderseits ist der Rotor über ein Nadellager an der Spindelmutter gelagert. Für einen einwandfrei eingestellten Luftspalt zwischen Rotor und Stator ist eine einwandfreie Lagerung des Rotors erforderlich, die bei der Vielzahl von beteiligten Bauteilen eine hochgenaue Fertigung und sorgfältige Montage erfordert.

### Zusammenfassung der Erfindung

Der Erfindung liegt damit das Problem zugrunde, einen Fahrwerkaktuator anzugeben, der demgegenüber einfach aufgebaut ist und der ein hohes Maß an Funktionssicherheit besitzt.

Zur Lösung dieses Problems ist bei einem Fahrwerkaktuator der eingangs genannten Art erfindungsgemäß vorgesehen, dass der Rotor über zwei axial voneinander beabstandete Lager auf der Mutter drehgelagert ist.

Bei dem erfindungsgemäßen Aktuator ist zum einen der Rotor ausschließlich auf der Mutter des Kugelgewindetriebs drehgelagert, was nicht zuletzt aus montagetechnischen Gründen vorteilhaft ist. Zur Bewegungskopplung wie auch zur Blockierung des Kugelgewindetriebs ist bei dem erfindungsgemäßen Fahrwerkaktuator lediglich eine Schlingfeder vorgesehen, über die der Rotor mit der Mutter verbunden ist. Dreht der Rotor, so kommt es, nachdem der Rotor um ein definiertes Winkelinkrement relativ zur Mutter verdreht ist, zu einer Mitnahme der Mutter über die Schlingfeder, so dass es zur axialen Spindelverstellung kommt. Selbstverständlich ist die Bewegungskopplung zwischen Rotor und Mutter über die Schlingbandfeder derart ausgelegt, dass eine Mitnahme der Mutter und daraus resultierend eine Spindelverstellung in beide Rotordrehrichtungen möglich ist. Dies jedoch nur dann, wenn die Bewegung respektive die Kraft, die auf den Aktuator respektive den Kugelgewindetrieb wirkt, aktiv über den Rotor eingebracht wird. Wird demgegenüber eine externe Kraft über das Fahrwerk, die über die Spindel eingetragen wird, in das System eingeleitet, so kommt es zu einer sehr geringen, definierten Relativbewegung zwischen Mutter und Rotor, das heißt, die Mutter wird ein geringes Winkelinkrement relativ zum feststehenden Rotor verdreht. Diese Verdrehung führt dazu, dass die Schlingbandfeder je nach Ausgestaltung gedehnt oder zusammengezogen wird, so dass es in jedem Fall zum Aufbau eines der weiteren Mutterdrehung entgegenwirkenden Reibmoments kommt. Der Kugelgewindetrieb ist gesperrt, die externe Kraft kann nicht zu einer weiteren Mutterdrehung führen, unabhängig davon, wie groß sie ist, da das über die Schlingfeder aufgebaute Reibmoment dem entgegenwirkt.

Ersichtlich ist der konstruktive Aufbau des erfindungsgemäßen Fahrwerkaktuators wesentlich einfacher als der des aus dem Stand der Technik bekannten Aktuators. Es kommt weder ein bewegungskoppelndes Planetengetriebe noch ein aufwändiger Kupplungsmechanismus unter Verwendung eines seinerseits aktiv anzusteuernden Magnetelements zum Einsatz. Vielmehr ist beim erfindungsgemäßen Fahrwerkaktuator eine rein mechanische Bewegungskopplung und Bewegungsblockierung realisiert. Auch lässt sich aufgrund des radial wie auch axial optimierten Aufbaus im Bereich der Bewegungskopplung und der Blockierung, also im Bereich zwischen Rotor und Mutter eine bauraumoptimierte Ausgestaltung erreichen.

Die Lagerung des Rotors erfolgt wie beschrieben über zwei Lager, über die der hülsenartige Rotor im Bereich seiner beiden Enden an der Mutter aufgelagert ist. Zweckmäßigerweise ist das eine Lager ein Festlager, während das andere Lager ein Loslager ist. Als ein solches Loslager kann beispielsweise ein Nadellager oder ein Gleitlager eingesetzt werden. Dies ist hier ohne weiteres möglich, da im Falle einer Betätigung des Fahrwerkaktuators die Mutter und der Rotor nur einen sehr kurzen Moment mit unterschiedlichen Drehzahlen drehen. Sobald die Bewegungskopplung über die Schlingfeder greift, drehen Rotor und Mutter gleich schnell, so dass einfach konzipierte Lager wie eben das beschriebene Nadellager oder ein Gleitlager beim erfindungsgemäßen Aktuator ohne weiteres eingesetzt werden können.

Aus montagetechnischen Gründen ist es besonders vorteilhaft, wenn das Loslager im Bereich des mit der Schlingfeder verbundenen Endes des Rotors angeordnet ist. Das Loslager, also beispielsweise das Nadellager, wird vor dem Einsetzen des Rotors in diesen eingepresst und zusammen mit dem Rotor auf die Mutter aufgeschoben, was die Montage beachtlich vereinfacht.

Das Festlager selbst kann ein beliebiges Lager sein, bevorzugt wird hierbei ein Kugellager oder ein Vierpunktlager eingesetzt. Zur sicheren Fixierung kann nach einer Weiterbildung der Erfindung das Festlager mit seinem Innenring an der Mutter über zwei Sicherungsringe und am Rotor über mit seinem Außenring an einem Ringbund anliegend mit einem weiteren Sicherungsring fixiert sein. Auch das Setzen der Sicherungsringe und daraus resultierend die Fixierung des Lagers ist sehr einfach und die Montage erleichternd.

In Weiterbildung der Erfindung kann die Mutter zusätzlich über ein Loslager an einem Gehäusebauteil, insbesondere einem Gehäusedeckel, gelagert sein, was es ermöglicht, die Steifigkeit der Mutter-Rotor-Einheit zu erhöhen. In diesem Fall ist auch die Mutter über zwei Lager gehäuseseitig gelagert, nämlich einem vorzugsweise als Festlager ausgeführten Lager, mit dem die Mutter im Bereich ihres einen Endes an einem Gehäusebauteil gelagert ist, während sie über das beschriebene Loslager an einem anderen Gehäusebauteil, beispielsweise dem beschriebenen Gehäusedeckel, mit ihrem anderen Ende gelagert ist. Zwischen diesen beiden Lagern befindet sich die Rotorlagerung wie auch die Schlingfederkopplung.

Der Rotor selbst ist bevorzugt hülsenartig ausgeführt, mithin also ein einfach gestaltetes Bauteil, das auch eine geringe Wandstärke aufweisen kann, da es letztlich lediglich der Übertragung des Drehmoments auf die Schlingfeder und über diese auf die Mutter dient.

Der Innendurchmesser des Stators über eine den Rotor übergreifende Länge ist etwas größer als der Außendurchmesser, so dass sich ein geringer Luftspalt bildet. Insbesondere in Verbindung mit der hülsenartigen Ausführung des Rotors ergibt sich hieraus insgesamt ein radial gesehen vorteilhaft niedriger Aufbau.

Auch die Mutter ist bevorzugt hohlzylindrisch und hülsenartig ausgeführt. Auf ihrer Außenseite sind mit der Schlingfeder zusammenwirkende Schließelemente, beispielsweise Mitnehmerschuhe und Ähnliches, angeordnet, insbesondere aufgepresst, mit einem entsprechend geführten, beispielsweise abgewinkelt liegenden Ende der Schlingfeder zusammenwirken. Selbstverständlich weist auch der Rotor entsprechende Schließelemente auf, die mit dem anderen Ende der Schlingfeder zusammenwirken und die die Schlingfeder mitnehmen. Diese Schließelemente können am Rotor angeformt oder ebenfalls auf- oder eingepresst sein.

### Kurze Beschreibung der Zeichnung

Ein Ausführungsbeispiel der Erfindung ist in der Zeichnung dargestellt und wird im Folgenden näher beschrieben. Es zeigt:
- Figur 1: eine Schnittansicht durch einen erfindungsgemäßen Fahrwerkaktuator in einer ersten Ausführungsform,
- Figur 2: eine Explosionsdarstellung der wesentlichen Einzelteile des Fahrwerkaktuators aus Figur 1,
- Figur 3: eine Explosionsdarstellung einer Baugruppe des Fahrwerkaktuators, umfassend den Kugelgewindetrieb, die Schlingfeder sowie ein die Mutter des Kugelgewindetriebs lagerndes Lager,
- Figur 4: eine weitere Explosionsdarstellung einer weiteren Baugruppe des Fahrwerkaktuators, umfassend die montierte Baugruppe aus Figur 3 sowie zusätzlich den Rotor nebst seiner Lagerungen, und
- Figur 5: eine Schnittansicht durch einen Fahrwerkaktuator einer zweiten Ausführungsform.

### Ausführliche Beschreibung der Zeichnung

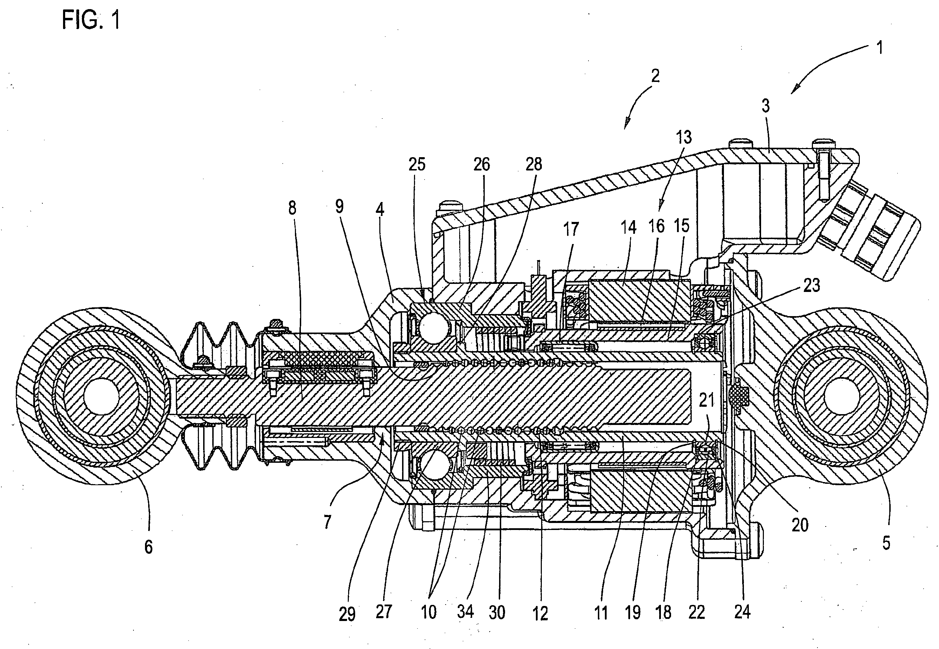

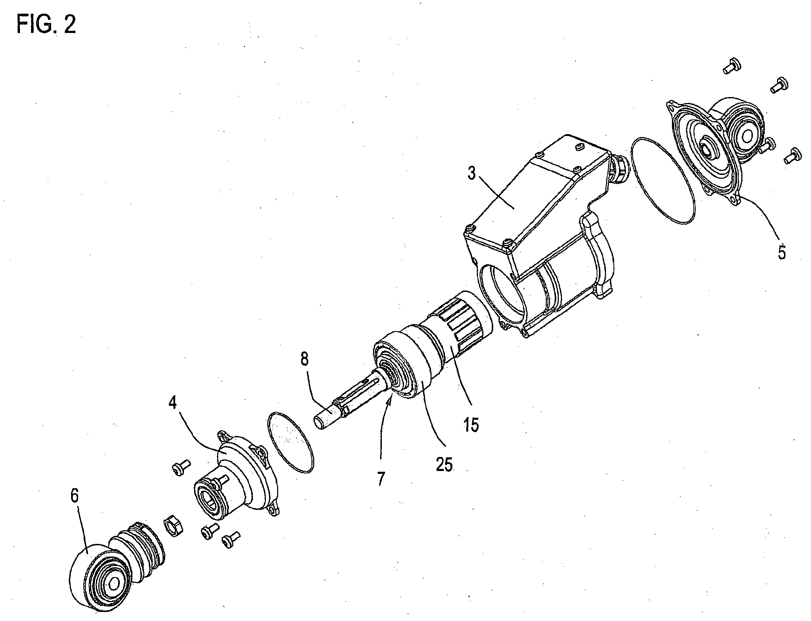

Figur 1 zeigt eine Schnittansicht durch einen erfindungsgemäßen Fahrwerkaktuator 1, der in den Explosionsdarstellungen der Figuren 2 - 4 noch detaillierter gezeigt ist. Der Fahrwerkaktuator 1 umfasst ein Gehäuse 2, bestehend aus einem ersten, größeren Gehäusebauteil 3 sowie einem zweiten, kleineren Gehäusebauteil 4. Am Gehäusebauteil 3 ist ein das Gehäuse zu der einen Seite hin abschließendes Aktuatorbauteil 5 angeordnet, an der gegenüberliegenden Seite befindet sich ein zweites Aktuatorbauteil 6, das mit einer Gewindespindel eines nachfolgend noch zu beschreibenden Kugelgewindetriebs verbunden ist. Beide Aktuatorbauteile 5, 6 sind über den noch zu beschreibenden Kugelgewindetrieb axial relativ zueinander verstellbar. Das Aktuatorbauteil 5 ist an einer ersten Fahrwerkskomponente zu befestigen, während das Aktuatorbauteil 6 an einer zweiten, relativ zur ersten zu bewegenden Fahrwerkskomponente anzubringen ist.

Wie beschrieben ist ein Kugelgewindetrieb 7 vorgesehen, umfassend eine Gewindespindel 8, die ein Außengewinde 9 aufweist. Auf der Gewindespindel 8 läuft über Kugeln 10 gelagert eine hülsenartige Mutter 11, die ein Innengewinde 12 aufweist, in dem die Kugeln 10 laufen. Während die Mutter lagefest im Gehäuse 2 gelagert ist, ist die Gewindespindel 8 axial verschiebbar, woraus die axiale Verstellbarkeit der Aktuatorbauteile 5, 6 zueinander resultiert.

Zum drehenden Antreiben der Mutter 10 ist ein Elektromotor 13 vorgesehen, umfassend einen Stator 14 und einen hülsenförmigen Rotor 15, die über einen Luftspalt 16 in an sich bekannter Weise voneinander beabstandet sind. Der Rotor 15 ist über ein erstes Lager, hier ein Loslager 17 in Form eines Nadellagers, das in den hülsenförmigen Rotor 15 eingepresst ist, direkt auf der Außenseite der hülsenförmigen Mutter 11 gelagert. Am anderen Ende ist der hülsenförmige Rotor 15 über ein zweites Lager, hier ein Festlager 18, ebenfalls unmittelbar auf der Mutter 11 gelagert. Dieses Festlager 18 ist über einen ersten Sicherungsring 19, der mutternseitig in einer Nut angeordnet ist, sowie einen zweiten Sicherungsring 20, der ebenfalls mutternseitig angeordnet ist, mit seinem Innenring 21 an der Mutter 11 festgelegt. Der Außenring 22 des Festlagers 18 liegt an einem Anschlagbund 23 des Rotors an, die andere Seite des Außenrings ist über einen dritten Sicherungsring 24, der in einer entsprechenden Nut am Rotor fixiert ist, gehaltert.

Der Rotor 15 dreht, wenn der Elektromotor 13 betrieben wird, wenn also der Stator 14 bestromt wird. Hierüber wird die Mutter 11 gedreht, die bei dem in Figur 1 beschriebenen Ausführungsbeispiel über ein Festlager 25 am Gehäuse 2 drehgelagert ist. Der Außenring 26 des Festlagers ist in einer entsprechenden Gehäusenut aufgenommen, während der Innenring 27 des Festlagers 25 an einem Anschlagbund 28 der Mutter 11 anliegt und an der gegenüberliegenden Seite über einen weiteren Sicherungsring 29 lagefest fixiert ist. Um die Mutter 11 drehen zu können, ist eine Bewegungskopplung zwischen Rotor 15 und Mutter 11 erforderlich, die hier über eine Schlingfeder 30 realisiert ist. Die Schlingfeder 30 weist an ihren beiden Enden jeweilige Mitnehmer 31 auf, die mit entsprechenden Schließelementen 32 an der Mutter respektive 33 am Rotor in an sich bekannter Weise zusammenwirken. In der Montagestellung greifen die jeweiligen Schließelemente 32, 33 in die Schlingfeder 30 ein, so dass bei einer Drehung des Rotors das jeweilige, drehrichtungsbezogen aktive Schließelement 33 an der jeweiligen Mitnehmerseite des Mitnehmers 31 angreift und auf diese Weise die Schlingfeder tordiert. Diese Torsions- oder Drehbewegung wird über die andere Mitnehmerseite respektive den anderen Mitnehmer 31 auf das entsprechende Schließelement 32 der Mutter 11 übertragen, so dass diese gedreht wird. Aus dieser Drehung resultiert wiederum die axiale Verschiebung der in der Mutter 11 laufenden Spindel 8. Da jeweils zwei Schließelemente 32, 33 vorgesehen sind, ergibt sich ersichtlich eine aktive Stellbewegung in beide Richtungen.

Die Schlingfeder 30 dient jedoch nicht nur dazu, Rotor 15 und Mutter 11 miteinander bewegungszukoppeln, sondern auch, den Kugelgewindetrieb 7 zu blockieren, um zu vermeiden, dass dieser sich unbeabsichtigt verstellt. Wirkt beispielsweise über das Aktuatorbauteil eine externe Kraft auf die Gewindespindel, so führt dies dazu, dass es zu einer geringen Drehbewegung der Mutter 11 kommt. Diese Drehbewegung führt dazu, dass eines der Schließelemente 32 wiederum an dem Mitnehmer 31 angreift. Dies führt dazu, dass die Schlingfeder 30 aufgeweitet wird, anders als im normalen, aktiven Stellbetrieb, wenn die Drehbewegung über den Rotor 15 eingeleitet wird, während welcher die Schlingfeder 30 zusammengezogen wird. Infolge der in diesem Betriebsfall jedoch erfolgenden Aufweitung der Schlingfeder kommt es dazu, dass sich die Außenseite der Schlingfeder 30 an die Innenseite des zylindrischen Verlängerungsabschnitts 34 des Außenrings 26 des Festlagers 25 anlegt. Hierüber wird ein Reibmoment aufgebaut, das mit zunehmend wirkender Kraft und daraus resultierend Verdrehung der Mutter 11 immer größer wird, bis es zu einer vollständigen Blockade kommt. Die Winkelverdrehung der Mutter, bis diese Blockierung einsetzt, ist relativ gering, sie beträgt nur wenige Grad, so dass letztlich keine Aktuatorverstellung eintritt. Das heißt, dass der Schlingfeder hier eine Doppelfunktion zukommt, nämlich zum einen die der Bewegungskopplung von Rotor 15 und Mutter 16, zum anderen die der Bildung eines Blockier- oder Arretierelements.

Figur 2 zeigt in einer Explosionsdarstellung die wesentlichen Komponenten, wobei die wesentliche Bauteilkomponente umfassend den Kugelgewindetrieb 7 sowie den Rotor 15 bereits in der Montagestellung gezeigt ist.

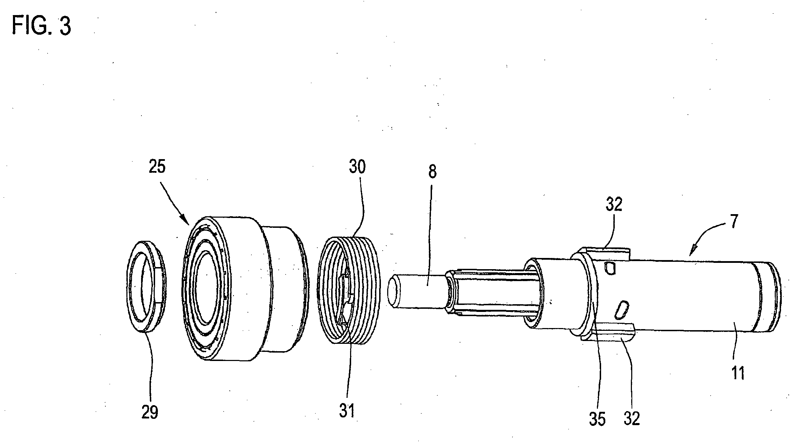

Figur 3 zeigt in Form einer Explosionsdarstellung den Kugelgewindetrieb 7 nebst Spindel 8 und Mutter 11, auf die die beiden an einem Trägerring 35 fixierten Schließelemente 32 aufgepresst sind. Zur Montage wird nun zunächst auf den Kugelgewindetrieb 7 die Schlingfeder 30 aufgesetzt, so dass der Mitnehmer 31 zwischen die beiden Schließelemente 32 greift. Anschließend wird das Festlager 25 aufgesetzt und anschließend über den Sicherungsring 29 fixiert.

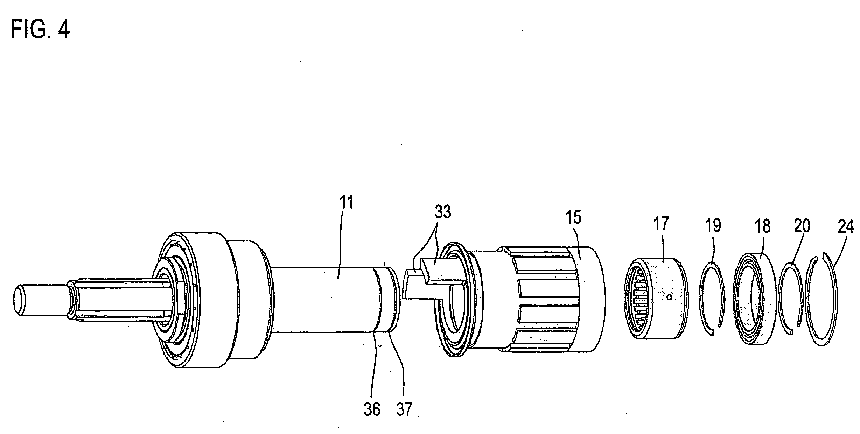

Die hierüber gebildete Baugruppe ist in Figur 4 gezeigt. An dieser ist sodann der Rotor 15 zu montieren. In diesen wird zunächst das Loslager 17, hier in Form eines Nadellagers, innenseitig eingepresst. Sodann wird der Rotor 15 nebst Loslager 17 auf die Mutter 11 aufgeschoben, die Drehlagerung auf der Mutter 11 erfolgt über das Loslager 17. Im nächsten Schritt wird der Sicherungsring 19 in die Nut 36 an der Mutter 11 eingeschnappt, woraufhin das Festlager 18 auf die Mutter 11 bzw. in den Rotor 15 eingeschoben wird. Der Außenund der Innenring des Festlagers 18 werden sodann über den Sicherungsring 20, der in die mutterseitige Nut 37 eingesetzt wird, sowie den weiteren Sicherungsring 24, der in eine nicht gezeigte Nut an der Innenwandung des Rotors 15 eingesetzt wird, fixiert. Diese sodann fertig montierte Baugruppe ist in Figur 2, mittig, gezeigt. Sie wird sodann in das Gehäuseteil 3 eingesetzt, woraufhin das Gehäuseteil 4 aufgesetzt und anschließend unter Zwischenschaltung geeigneter Dichtringe und Ähnlichem die Aktuatorbauteile 5, 6 fixiert werden.

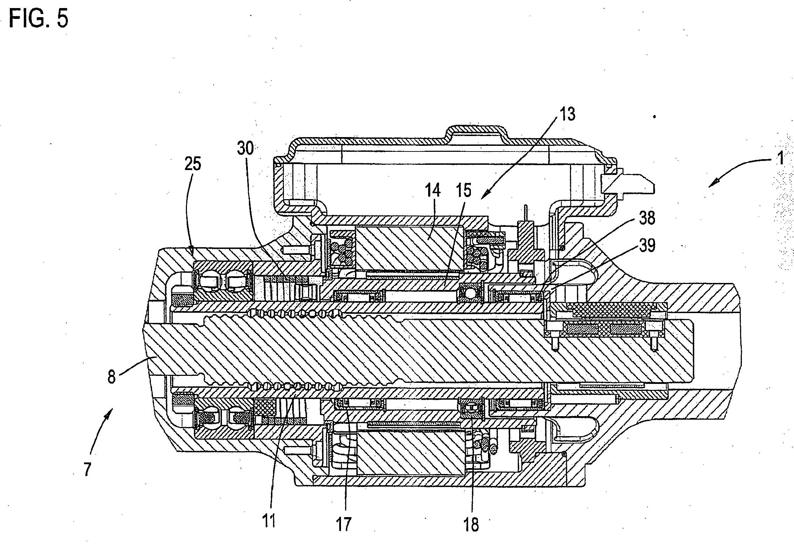

Figur 5 zeigt schließlich eine weitere Ausführungsform eines erfindungsgemäßen Fahrwerkaktuators 1, dessen Aufbau insoweit dem des Aktuators 1 aus den Figuren 1 - 4 vergleichbar ist. Deshalb werden für gleiche Bauteile auch gleiche Bezugszeichen verwendet. Vorgesehen ist wiederum ein Kugelgewindetrieb 7 mit Spindel 8 und Mutter 11, sowie ein Elektromotor 13 umfassend einen Stator 14 und einen Rotor 15. Die Bewegungskopplung sowie auch die Positionsblockierung erfolgt wiederum über eine Schlingfeder 30 in der gleichen wie zuvor beschriebenen Weise.

Auch hier ist der Rotor 15 über ein Loslager 17 sowie ein Festlager 18 an der Mutter 11 gelagert. Zusätzlich ist hier jedoch die Mutter 11 mit ihrem zweiten Ende über ein weiteres Loslager 38 an einem Gehäusebauteil, hier einem Gehäusedeckel 39, gelagert. Hierüber kann die Steifigkeit der Mutter-Rotor-Einheit erhöht werden.

### Bezugszahlenliste

- 1: Fahrwerkaktuator
- 2: Gehäuse
- 3: größeres Gehäusebauteil
- 4: kleineres Gehäusebauteil
- 5: Aktuatorbauteil
- 6: zweites Aktuatorbauteil
- 7: Kugelgewindetrieb
- 8: Gewindespindel
- 9: Außengewinde
- 10: Kugeln
- 11: Mutter
- 12: Innengewinde
- 13: Elektromotor
- 14: Stator
- 15: Rotor
- 16: Luftspalt
- 17: Loslager
- 18: Festlager
- 19: Sicherungsring
- 20: Sicherungsring
- 21: Innenring
- 22: Außenring
- 23: Anschlagbund
- 24: Sicherungsring
- 25: Festlager
- 26: Außenring
- 27: Innenring
- 28: Anschlagbund
- 29: Sicherungsring
- 30: Schlingfeder
- 31: Mitnehmer
- 32: Schließelement
- 33: Schließelement
- 34: Verlängerungsabschnitt
- 35: Trägerring
- 36: Nut
- 37: mutterseitige Nut
- 38: Loslager
- 39: Gehäusedeckel

## Patentansprüche

1. Fahrwerkaktuator zum Stellen eines beweglich gelagerten Bauteils eines Kraftfahrzeugfahrwerks, umfassend ein mit dem beweglich gelagerten Bauteil zu verbindendes erstes Aktuatorbauteil und ein mit einem lagefesten Fahrwerksbauteil zu verbindendes zweites Aktuatorbauteil, wobei beide Aktuatorbauteile über einen Kugelgewindetrieb umfassend eine Gewindespindel und eine auf dieser laufende Mutter axial verstellbar sind, wobei die Mutter über einen Antriebsmotor, der als Elektromotor umfassend einen mit der Mutter bewegungsgekoppelten Rotor und einen Stator in koaxialer Anordnung zur Mutter ausgeführt ist, zur Axialverstellung der Gewindespindel antreibbar ist, wobei der Rotor (15) mit der Mutter (11) über eine die Mutter (11) radial umgebende Schlingfeder (30) bewegungsgekoppelt ist, über die die Mutter (11) bei Drehung des Rotors (15) gedreht wird, und welche Schlingfeder (30) eine - durch eine auf die Mutter (11) wirkende und diese verdrehende externe fahrwerkseitige Kraft betätigbare - Bremseinrichtung bildet, die ein der Mutterdrehung entgegenwirkendes Reibmoment aufbaut, **dadurch gekennzeichnet, dass** der Rotor (15) über zwei axial voneinander beabstandete Lager (17, 18) auf der Mutter (11) drehgelagert ist.

2. Fahrwerkaktuator nach Anspruch 1, **dadurch gekennzeichnet, dass** der Rotor (15) auf der Mutter (11) über ein Festlager (18) und ein Loslager (17) gelagert ist.

3. Fahrwerkaktuator nach Anspruch 2, **dadurch gekennzeichnet, dass** das Loslager (17) ein Nadellager oder ein Gleitlager ist.

4. Fahrwerkaktuator nach Anspruch 2 oder 3, **dadurch gekennzeichnet, dass** das Loslager (17) im Bereich des mit der Schlingfeder (30) verbundenen Endes des Rotors (15) angeordnet ist.

5. Fahwerkaktuator nach einem der Ansprüche 2 bis 4, **dadurch gekennzeichnet, dass** das Festlager (18) ein Kugellager oder ein Vierpunktlager ist.

6. Fahrwerkaktuator nach einem der Ansprüche 2 bis 5, **dadurch gekennzeichnet, dass** das Festlager (18) mit einem Innenring (21) an der Mutter (11) über zwel Sicherungsringe (19, 20) und am Rotor (15) Ober mit einem Außenring (22) an einem Ringbund (23) anliegend mit einem weiteren Sicherungsring (24) fixiert ist.

7. Fahrwerkaktuator nach einem der vorangehenden Ansprüche, **dadurch gekennzeichnet, dass** die Mutter (11) zusätzlich Ober ein Loslager (38) an einem Gehäusebauteil (39), insbesondere einem Gehäusedeckel, gelagert ist.

8. Fahrwerkaktuator nach einem der vorangehenden Ansprüche, **dadurch gekennzeichnet, dass** der Rotor (15) hülsenartig ausgeführt ist.

9. Fahrwerkaktuator nach einem der vorangehenden Ansprüche, **dadurch gekennzeichnet, dass** der Innendurchmesser des Stators (14) über eine den Rotor (15) übergreifende Länge größer als der Außendurchmesser des Rotors (15) ist.

10. Fahrwerkaktuator nach einem der vorangehenden Ansprüche, **dadurch gekennzeichnet, dass** die Mutter (11) hohlzylindrisch und hülsenartig ausgeführt ist und auf ihrer Außenseite mit der Schlingfeder (30) zusammenwirkende Schließelemente (32) angeordnet, insbesondere aufgepresst sind.

11. Fahrwerkaktuator nach einem der vorangehenden Ansprüche, **dadurch gekennzeichnet, dass** am Rotor mit der Schlingfeder (30) zusammenwirkende Schließelemente (33) angeordnet, insbesondere angeformt oder auf- oder eingepresst sind.

## Claims

1. Chassis actuator for adjusting a movably mounted component of a vehicle chassis, comprising a first actuator component for connecting to the movably mounted component and comprising a second actuator component for connecting to a positionally fixed chassis component, wherein the two actuator components can be adjusted axially by means of a ball screw comprising a threaded spindle and comprising a nut which runs on said threaded spindle, wherein the nut can be driven by means of a drive motor, which is designed as an electric motor comprising a rotor coupled in terms of movement to the nut and comprising a stator arranged coaxially with respect to the nut, for the axial adjustment of the threaded spindle, wherein the rotor (15) is coupled in terms of movement to the nut (11) by means of a wrap spring (30) which radially surrounds the nut (11) and via which the nut (11) is rotated during rotation of the rotor (15) and which wrap spring (30) forms a brake device, which brake device can be actuated by means of an external chassis force which acts on and rotates the nut (11) and which brake device builds up a friction moment which counteracts the rotation of the nut, **characterized in that** the rotor (15) is rotatably mounted on the nut (11) by means of two bearings (17, 18) axially spaced apart from one another.

2. Chassis actuator according to Claim 1, **characterized in that** the rotor (15) is mounted on the nut (11) by means of a fixed bearing (18) and a floating bearing (17).

3. Chassis actuator according to Claim 2, **characterized in that** the floating bearing (17) is a needle-roller bearing or a plain bearing.

4. Chassis actuator according to Claim 2 or 3, **characterized in that** the floating bearing (17) is arranged in the region of that end of the rotor (15) which is connected to the wrap spring (30).

5. Chassis actuator according to one of Claims 2 to 4, **characterized in that** the fixed bearing (18) is a ball bearing or a four-point bearing.

6. Chassis actuator according to one of Claims 2 to 5, **characterized in that** the fixed bearing (18) is fixed with an inner ring (21) to the nut (11) by means of two circlips (19, 20) and to the rotor (15) by means of contact with an outer ring (22) against an annular collar (23) with a further circlip (24).

7. Chassis actuator according to one of the preceding claims, **characterized in that** the nut (11) is additionally mounted by means of a floating bearing (38) on a housing component (39), in particular a housing cover.

8. Chassis actuator according to one of the preceding claims, **characterized in that** the rotor (15) is formed in the manner of a sleeve.

9. Chassis actuator according to one of the preceding claims, **characterized in that** the inner diameter of the stator (14) is larger, over a length overlapping the rotor (15), than the outer diameter of the rotor (15).

10. Chassis actuator according to one of the preceding claims, **characterized in that** the nut (11) is of hollow cylindrical and sleeve-like design, and closing elements (32) which interact with the wrap spring (30) are arranged on, in particular pressed onto, the outer side of said nut (11).

11. Chassis actuator according to one of the preceding claims, **characterized in that** closing elements (33) which interact with the wrap spring (30) are arranged on, in particular integrally formed on or pressed onto or pressed into, the rotor.

## Revendications

1. Actionneur de châssis pour le réglage d'un composant d'un châssis de véhicule automobile supporté de manière mobile, comprenant un premier composant d'actionneur devant être connecté au composant supporté de manière mobile, et un deuxième composant d'actionneur devant être connecté à un composant du châssis fixé en position, les deux composants d'actionneur pouvant être réglés axialement par le biais d'une vis à billes comprenant une broche filetée et un écrou se déplaçant sur celle-ci, l'écrou pouvant être entraîné par le biais d'un moteur d'entraînement qui est réalisé sous forme de moteur électrique comprenant un rotor accouplé de manière mobile avec l'écrou et un stator agencé coaxialement par rapport à l'écrou, pour le réglage axial de la broche filetée, le rotor (15) étant accouplé de manière mobile à l'écrou (11) par le biais d'un ressort enroulé (30) entourant radialement l'écrou (11), par le biais duquel ressort enroulé l'écrou (11) est tourné lors de la rotation du rotor (15), et lequel ressort enroulé (30) forme un dispositif de freinage pouvant être actionné par une force externe du côté du châssis agissant sur l'écrou (11) et faisant tourner celui-ci, lequel dispositif de freinage produit un couple de friction agissant à l'encontre de la rotation de l'écrou, **caractérisé en ce que** le rotor (15) est supporté à rotation sur l'écrou (11) par le biais de deux paliers (17, 18) espacés axialement l'un de l'autre.

2. Actionneur de châssis selon la revendication 1, **caractérisé en ce que** le rotor (15) est supporté sur l'écrou (11) par le biais d'un palier fixe (18) et d'un palier fou (17).

3. Actionneur de châssis selon la revendication 2, **caractérisé en ce que** le palier fou (17) est un palier à aiguilles ou un palier lisse.

4. Actionneur de châssis selon la revendication 2 ou 3, **caractérisé en ce que** le palier fou (17) est disposé dans la région de l'extrémité du rotor (15) connectée au ressort enroulé (30).

5. Actionneur de châssis selon l'une quelconque des revendications 2 à 4, **caractérisé en ce que** le palier fixe (18) est un roulement à billes ou un palier à quatre points.

6. Actionneur de châssis selon l'une quelconque des revendications 2 à 5, **caractérisé en ce que** le palier fixe (18) est fixé avec une bague interne (21) à l'écrou (11) par le biais de deux bagues de fixation (19, 20) et au rotor (15) par le biais d'une bague extérieure (22) s'appliquant contre un épaulement annulaire (23) avec une bague de fixation supplémentaire (24).

7. Actionneur de châssis selon l'une quelconque des revendications précédentes, **caractérisé en ce que** l'écrou (11) est en outre supporté par le biais d'un palier fou (38) sur un composant de boîtier (39), en particulier un couvercle de boîtier.

8. Actionneur de châssis selon l'une quelconque des revendications précédentes, **caractérisé en ce que** le rotor (15) est réalisé en forme de douille.

9. Actionneur de châssis selon l'une quelconque des revendications précédentes, **caractérisé en ce que** le diamètre intérieur du stator (14), sur une longueur venant en prise par le dessus avec le rotor (15), est supérieur au diamètre extérieur du rotor (15).

10. Actionneur de châssis selon l'une quelconque des revendications précédentes, **caractérisé en ce que** l'écrou (11) est réalisé sous forme cylindrique creuse et en forme de douille et des éléments de fermeture (32) coopérant avec le ressort enroulé (30) sont disposés, en particulier sont pressés, sur son côté extérieur.

11. Actionneur de châssis selon l'une quelconque des revendications précédentes, **caractérisé en ce que** des éléments de fermeture (33) coopérant avec le ressort enroulé (30) sont disposés, en particulier sont façonnés ou sont pressés sur ou dans le rotor.
